(19) Europäisches Patentamt
European Patent Office
Office européen des brevets

(11) EP 1 831 296 B1

(12) **EUROPEAN PATENT SPECIFICATION**

(45) Date of publication and mention of the grant of the patent:
**08.10.2008 Bulletin 2008/41**

(21) Application number: **05850472.1**

(22) Date of filing: **21.12.2005**

(51) Int Cl.:
***C08K 3/36*** (2006.01) ***C08F 14/18*** (2006.01)
***C08L 27/12*** (2006.01)

(86) International application number:
**PCT/EP2005/056996**

(87) International publication number:
**WO 2006/067160 (29.06.2006 Gazette 2006/26)**

# (54) THERMOPLASTIC HALOGENATED POLYMER COMPOSITION

THERMOPLASTISCHE HALOGENIERTE POLYMERZUSAMMENSETZUNG

COMPOSITION DE POLYMERE THERMOPLASTIQUE HALOGENE

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.12.2004 US 638121 P**

(43) Date of publication of application:
**12.09.2007 Bulletin 2007/37**

(73) Proprietor: **Solvay Solexis, Inc.**
**Thorofare, NJ 08086 (US)**

(72) Inventors:
- **ARGASINSKI, Jerzy Karol**
**Sicklerville, New Jersey 08081 (US)**
- **MEUNIER, Vincent P.**
**Cherry Hill, New Jersey 08034 (US)**

(74) Representative: **Jacques, Philippe et al**
**Solvay (Société Anonyme),**
**Rue de Ransbeek, 310**
**1120 Bruxelles (BE)**

(56) References cited:
**EP-A- 0 366 558** **US-A- 5 077 115**
**US-A1- 2001 053 408**

- **PATENT ABSTRACTS OF JAPAN vol. 011, no. 053 (C-404), 19 February 1987 (1987-02-19) & JP 61 215615 A (DENKI KAGAKU KOGYO KK), 25 September 1986 (1986-09-25)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 831 296 B1

## Description

### Technical Field

The invention pertains to thermoplastic halogenated polymer compositions, such as molding compositions, comprising fused silica particles.

### Background Art

Thermoplastic halogenated polymer compositions, especially fluoropolymer compositions, are generally combined with limited amounts of additives to improve properties of the polymer and of the products therefrom. Impact modifiers commonly used for thermoplastic polymers are elastomers, including silicone rubbers, ABS (Acrylonitrile-Butadiene-Styrene) and MBS (Methacrylale-Butadiene-Styrene) terpolymers, ethylacrylate copolymers, LLDPE (Linear Low Density PolyEthylene), and maleic anhydride-grafted polymers. Silica compounds, both precipitated silica and glass fibers, have been used in the art as shrinkage reducing additives and fillers.

Conventional silica is in the form of flakes and agglomerates easily. As such, when combined with a halogenated polymer, the flakes of silica will agglomerate. So-formed agglomerates are hard to break: during processing, for instance when the halogenated polymer is mixed and/or extruded, processing difficulties are encountered. Final mechanical properties (in particular strength) of the filled halogenated polymer are negatively affected.

Also, the addition of silica compounds to halogenated polymers, especially fluoropolymers, is not recommended, as has been found in the art to negatively affect other properties. Conventional silica generally lowers the thermal stability of fluoropolymers, as a result of impurities inherent in the silica, which may be as high as 2 % by weight of the silica. Thus, great caution is advised when the silica filled fluoropolymers are processed, particularly when melt processing is applied to thermoplastic fluoropolymer compositions. Further, the impurities may cause discoloration of processed fluoropolymer resin, particularly in the case of polymers comprising vinylidene fluoride.

On the other hand, fused silica, thanks to its outstanding ceramic and dielectric properties, has been broadly used in the past for preparing highly loaded fluoropolymer composites useful as ceramic substrate materials for electronics. Thus, US 5077115 (ROGERS CORP [US]) 31.12.1991 discloses a composite material made of a thermoplastic matrix comprising a fluoropolymer, such as ECTFE (ethylene/chlorotrifluoroethylene copolymer), and a ceramic filler like fused silica, in an amount exceeding 40 % by volume. Similarly, US 5358775 (ROGERS CORP (US)) 25.10.1994 discloses an electrical substrate material of high dielectric constant and low thermal coefficient of dielectric constant comprising a fluoropolymer matrix filled with from 40 to 60 % by volume of particulate ceramic materials. Ceramic fillers include fused silica, outstanding for its low coefficient of thermal expansion (CTE).

Also, US 2001/0053408 A (ALLEN (US)) 20.12.2001 discloses an electric circuit board fluoropolymer substrate comprising a fluoropolymer matrix filled with from 15 to 95 % by volume of fillers, like, notably, fused silica.

Finally, composites of a fluoropolymer matrix with a particulate ceramic filler comprising a first ceramic material having high dielectric constant and a second ceramic material, such as fused silica, having low CTE have been disclosed in EP 0695116 A (ROGERS CORP (US)) 31.01.1996 .

These documents do not address the above mentioned problems related to the properties and processing of halogenated polymer compositions comprising limited amounts of silica additives.

### Disclosure of the invention

The above discussed and other problems and deficiencies of the prior art are overcome or alleviated by the thermoplastic halogenated polymer of the present invention.

Thus, there is here provided a thermoplastic halogenated polymer composition comprising:

- at least one thermoplastic halogenated polymer (A); and
- less than 30 % by weight of (A) of fused silica particles having a BET ($N_2$) surface area of at most 50 $m^2/g$ (B).

SAID thermoplastic halogenated polymer (A) is chosen among vinylidene fluoride polymers, ethylene/chlorotrifluoroethylene copolymers and mixtures thereof.

Another object of the invention is a process for manufacturing a thermoplastic halogenated polymer composition comprising mixing the thermoplastic halogenated polymer (A) and the fused silica particles (B).

Another object of the invention is the use of fused silica particles (B) to improve the impact properties of thermoplastic halogenated polymer (A).

Another object of the invention is the use of fused silica particles (B) to improve the flammability and smoke release properties of the thermoplastic halogenated polymer (A).

Still objects of the invention are the articles, such as, for instance, molded items, shaped articles, pipes, drainage pipes, flexible pipes, fittings, films, sheets, membranes, coatings, hollow bodies, comprising the thermoplastic halogenated polymer composition of the invention.

Advantageously, the thermoplastic halogenated polymer compositions comprising fused silica particles (B) have improved properties, such as impact resistance, hardness dimensional stability, compared to thermoplastic polymers not having the fused silica particles. Moreover, advantageously the inclusion of the fused silica particles (B) docs not deleteriously affect other properties of the thermoplastic halogenated polymers (A), such as thermal stability. Thus the thermoplastic halogenated polymer composition can be advantageously processed without incurring discoloration or thermal degradation.

For the purpose of the invention the term "fused silica" is intended to denote a high purity synthetic amorphous silicon dioxide, produced by melting high purity silica at temperatures exceeding 1200°C in an electric arc furnace or resistance furnace. Thanks to its melt viscosity, fused silica can be notably solidified and annealed without crystallizing.

For the purpose of the invention, the term "high purity" is intended to denote total metallic impurity content of advantageously less than 50 ppm.

The fused silica of the invention has a total metallic impurity of preferably less than 15 ppm, more preferably less than 10 ppm, still more preferably less than 7.5 ppm.

Advantageously, fused silica has a refractive index ($n_d$) of at least 1.45 at 589.3 nm (sodium yellow d-line).

Advantageously, fused silica of the invention is transparent.

When light interacts with matter, it can be reflected, absorbed, scattered, or transmitted. An object is generally described as "transparent" if a significant fraction of the incident light is transmitted through the object. An object is considered "opaque" if very little light is transmitted through it. And object is considered "translucent" if some light passes through but not in a way that a coherent image can be seen through it. Typically, this occurs if light must take a circuitous path through the object, scattering from embedded particles, defects or grain boundaries.

Thus, the common characteristic of fused silica that makes it transparent is that it (1) does not reflect much (i.e. advantageously less than 50%, preferably less than 30%) of incoming light from its surface, (2) does not absorb much (i.e. advantageously less than 50%, preferably less than 30%) of said incoming light, and (3) is uniform enough not to scatter much (i.e. advantageously less than 50%, preferably less than 30%) of said incoming light.

Fused silica transmits preferably more than 80 % of UV light having a wavelength of 200 nm, and transmits preferably more than 90 % of UV light having a wavelength of greater than 300 nm.

In view of all the above, fused silica is thus notably distinguishable from silica gel, precipitated silica and pyrogenic silica.

Silica gel is formed by precipitating in acid conditions by adding a strong acid to a solution, generally aqueous solution, of an alkaline metal silicate and typically has a BET ($N_2$) surface area ranging from 200 to 800 $m^2/g$ and may contain up to I % wt of $Na_2$ O and is not transparent.

Precipitated silica is formed by precipitating in basic conditions by adding acid up to a pH value of 9-10 to a solution, generally aqueous solution, of an alkaline metal silicate and typically has a BET ($N_2$) surface area ranging from 50 to 700 $m^2/g$ and may contain up to 2 % wt of $Na_2O$ and is not transparent.

Pyrogenic silica, also known as fumed silica, is prepared by oxidizing organic or inorganic silicon compounds, such as Silicon tetrachloride or silicon esters, at temperatures exceeding 1000°C and typically has a BET ($N_2$) surface area ranging from 50 to 450 $m^2/g$ and may contain up to 0.5 % wt of $Na_2O$ and is not transparent.

For the purpose of the invention the term "particle" is intended to denote a mass of material that has a definite three-dimensional volume and shape, characterized by three dimensions, wherein none of said dimensions exceed the remaining two other dimensions of more than 200 %.

Particles are generally not equidimensional, i.e. that are longer in one direction than in others. Nevertheless, particles are notably distinguishable from fibers (which have a dimension exceeding the two others and being at least three-fold, preferably at least five-fold larger than the remaining).

The shape of a particle can be notably expressed in terms of the sphericity $\Phi_s$, which is independent of particle size. The sphericity of a particle is the ratio of the surface-volume ratio of a sphere with equal volume as the particle and the surface-volume ratio of the particle. For a spherical particle of diameter $D_p$, $\Phi_s$ = 1; for a non-spherical particle, the sphericity is defined as

$$\Phi_s = \frac{6 \cdot v_p}{D_p \cdot S_p}$$

wherein:

$D_p$ is the equivalent diameter of particle;

$S_p$ is the surface area of one particle;

$v_p$ is the volume of one particle.

The equivalent diameter is defined as the diameter of a sphere of equal volume. $D_p$ is usually taken to be the nominal size based on screen analysis or microscopic analysis. The surface area is found from adsorption measurements or from the pressure drop in a bed of particles.

The fused silica particles (B) of the invention have a sphericity $\Phi_s$ of advantageously at least 0.6, preferably at least 0.65, more preferably at least 0.7.

Good results have been obtained with fused silica particles having a $\Phi_s$ from 0.7 to 0.95.

The fused silica particles (B) of the invention have an average particle size (APS, hereinafter) of advantageously at least 0.2 $\mu$m, preferably of at least 0.3 $\mu$m, more preferably of at least 0.5 $\mu$m.

The fused silica particles (B) of the invention have an average particle size of advantageously at most 5 $\mu$m, preferably of at most 3 $\mu$m, more preferably of at most 2 $\mu$m.

Good results have been obtained with fused silica particles having an average particle size from 0.2 to 2 $\mu$m.

The average particle size can be advantageously measured by small angle X-ray scattering method using an X-rays Microtrack particle analyzer according to ISO 13762.

Advantageously, the fused silica particles (B) are free from surface treatment agents, such as for instance silane coatings, siloxane coatings, polymeric coatings and the like.

The fused silica particles (B) of the invention have a BET ($N_2$) surface area of at most 50 $m^2$/g, preferably at most 30 $m^2$/g, more preferably at most 25 $m^2$/g.

The fused silica particles (B) of the invention have a BET ($N_2$) surface area of advantageously at least 5 $m^2$/g, preferably at least 6 $m^2$/g, more preferably at least 7 $m^2$/g.

Good results have been obtained with fused silica particles (B) having a BET ($N_2$) surface area from 5 to 50 $m^2$/g.

Fused silica particles having a BET ($N_2$) surface area exceeding 50 $m^2$/g are very difficult to disperse in the thermoplastic halogenated polymer composition and generate agglomerates responsible for deteriorated mechanical properties.

The BET surface area is measured as per the Brunauer, Emmett and Teller method of calculation, according to ISO 9277.

The fused silica particles (B) have an amorphous silica content of advantageously at least 99 % wt, preferably of at least 99.5% wt, more preferably of at least 99.9% wt.

Fused silica particles available from Suncolor Corporation, North Canton, Ohio, USA, such as UVT Sunspheres 00.5, may be used in the invention.

The fused silica particles (B) are comprised in the thermoplastic halogenated polymer composition of the invention in amount of at most 30%, preferably at most 25 %, more preferably at most 20 % by weight of the thermoplastic halogenated polymer (A).

The fused silica particles (B) are comprised in the thermoplastic halogenated polymer composition of the invention in amount of advantageously at least 0.5 %, preferably at least 1 %, more preferably at least 2% by weight of the thermoplastic halogenated polymer (A).

Good results have been obtained with thermoplastic halogenated polymer composition comprising from 0.5 to 30 % of fused silica particles (B) by weight of thermoplastic halogenated polymer (A).

When the thermoplastic halogenated polymer composition comprises more than 30% of fused silica particles (B) by weight of (A), the particles (B) are not easily dispersed and it becomes difficult to process the composition with standard equipments.

For applications involving UV and/or light transmittance, the preferred amount of fused silica particle (B) is from 1 % to 5 %, by weight of the thermoplastic halogenated polymer (A).

The thermoplastic halogenated polymer composition comprises advantageously at least 50 % by weight, preferably at least 60 % by weight, more preferably at least 65 % by weight of thermoplastic halogenated polymer (A), with respect to the total weight of the composition.

The halogenated polymer (A) of the invention should be thermoplastic.

The term "thermoplastic" is understood to mean, for the purposes of the present invention, polymers existing, at room temperature, below their glass transition temperature, if they are amorphous, or between their glass transition temperature and their melting point if they are semicrystalline, and which are linear (i.e. not reticulated). These polymers have the property of becoming soft when they are heated and of becoming rigid again when they are cooled, without there being an appreciable chemical change. Such a definition may be found, for example, in the encyclopedia called "Polymer Science Dictionary", Mark S.M. Alger, London School of Polymer Technology, Polytechnic of North London, UK, published by Elsevier Applied Science, 1989.

Thermoplastic polymers are thus distinguishable from elastomers.

For the purpose of the invention, the term "elastomer" is intended to designate a true elastomer or a polymer

resin serving as a base constituent for obtaining a true elastomer.

True elastomers are defined by the ASTM, Special Technical Bulletin, No. 184 standard as materials capable of being stretched, at room temperature, to twice their intrinsic length and which, once they have been released after holding them under tension for 5 minutes, return to within 10% of their initial length in the same time.

Polymer resins serving as a base constituent for obtaining true elastomers are in general amorphous products having a glass transition temperature ($T_g$) below room temperature. In most cases, these products correspond to copolymers having a $T_g$ below 0°C and including reactive functional groups (optionally in the presence of additives) allowing the true elastomer to be formed.

Preferably, the thermoplastic halogenated polymer (A) of the invention is semi-crystalline.

The term "semi-crystalline" is intended to denote a polymer having a heat of fusion of more than 1 J/g when measured by Differential Scanning Calorimetry (DSC) at a heating rate of 10°C/min, according to ASTM D 3418.

Preferably, the halogenated polymer of the invention has a heat of melting of at least 2 J/g, more preferably of at least 3 J/g.

For the purpose of the present invention, "halogenated polymer" is intended to denote any polymer comprising more than 25 % wt of recurring units derived from at least one ethylenically unsaturated monomer comprising at least one halogen atom (hereafter, halogenated monomer).

Halogenated monomers can notably be chosen among the group consisting of chlorinated monomers and fluorinated monomers.

Non limitative examples of chlorinated monomers arc vinyl chloride and vinylidene chloride.

The halogenated polymer is preferably a fluoropolymer.

For the purpose of the present invention, "fluoropolymer" is intended to denote any polymer comprising more than 25 % wt of recurring units derived from at least one ethylenically unsaturated monomer comprising at least one fluorine atom (hereinafter, fluorinated monomer).

The fluoropolymer comprises preferably more than 30 % wt, more preferably more than 40 % wt of recurring units derived from the fluorinated monomer.

The fluorinated monomer can further comprise one or more other halogen atoms (Cl, Br, I).

Shall the fluorinated monomer be free of hydrogen atom, it is designated as per(halo)fluoromonomer. Shall the fluorinated monomer comprise at least one hydrogen atom, it is designated as hydrogen-containing fluorinated monomer.

Non limitative examples of fluorinated monomers are notably vinylidene fluoride ($VF_2$) and chlorotrifluoroethylene (CTFE).

The fluoropolymer can optionally comprise recurring units derived from at least one comonomer different from the fluorinated monomer.

The comonomer can notably be either hydrogenated (i.e. free of halogen atoms) or fluorinated (i.e. containing at least one fluorine atom).

Non limitative examples of suitable hydrogenated comonomers are notably ethylene, propylene and acrylic monomers, like methyl methacrylate, acrylic acid, methacrylic acid and hydroxyethyl acrylate, as well as styrene monomer, like styrene and p-methytstyrene.

Non limitative examples of suitable fluorinated comonomers are notably:

- $C_3$-$C_8$ perfluoroolefins, such as hexafluoropropene;
- $C_2$-$C_8$ hydrogenated monofluoroolefins, such as vinyl fluoride;
- 1,2-difluoroethylene and trifluoroethylene;
- perfluoroalkylethylenes complying with formula $CH_2$ =CH-$R_{f0}$, in which $R_{f0}$ is a $C_1$-$C_6$ perfluoroalkyl;
- chloro- and/or bromo- and/or iodo-$C_2$ -$C_6$ fluoroolefins, like chlorotrifluoroethylene;
- fluoro- and perfluoroalkylvinylethers complying with formula $CF_2$=CFO$R_{f1}$ in which $R_{f1}$ is a C -C fluoro- or perfluoroalkyl, e.g. $CF_3$, $C_2F_2$, $C_3F_7$ ;
- $CF_2$=CFO$X_0$ (per)fluoro-oxyalkylvinylethers, in which X $_0$ is a $C_1$-$C_{12}$ alkyl, or a $C_1$-$C_{12}$ oxyalkyl, or a $C_1$-$C_{12}$ (per) fluorooxyallcyl having one or more ether groups, like perfluoro-2-propoxy-propyl;
- functional (per)fluoro-oxyalkylvinylethers complying with formula $CF_2$ =CFO$Y_0$, in which $Y_0$ is a $C_1$ -$C_{12}$ alkyl or (per) fluoroalkyl, or a $C_1$-$C_{12}$ oxyalkyl, or a $C_1$ -$C_{12}$ (per)fluorooxyalkyl having one or more ether groups and $Y_0$ comprising a carboxylic or sulfonic acid group, in its acid, acid halide or salt form;
- fluorodioxoles, especially perfluorodioxoles.

The fluoropolymer can be either perfluorinated or partially fluorinated.

For the purpose of the invention, the term "perfluorinated fluoropolymer" is intended to denote a fluoropolymer free of hydrogen atoms.

Shall the fluoropolymer be perfluorinated, it is preferably "melt-processible".

For the purpose of the present invention, by the term "melt-processible" is meant that the fluoropolymer can

be processed (i.e. fabricated into shaped articles such as films, fibers, tubes, wire coatings and the like) by conventional melt extruding, injecting or casting means. Such requires that the melt viscosity at the processing temperature be no more than $10^7$ poise, preferably in the range from $10^3$ to $10^7$ poise, and most preferably from $10^4$ to $10^6$ poise.

The melt viscosity of the perfluorinated fluoropolymers is measured according to ASTM D-1238-52T, using a cylinder, orifice and piston tip made of a corrosion-resistant alloy, charging a 5.0 g sample to the 9.53 inside diameter cylinder which is maintained at 380°C, extruding the sample 5 minutes after charging through a 2.10 mm diameter, 8.00 mm long square-edged orifice under a load (piston plus weight) of 5 kg. Melt viscosity is calculated in poise from the observable extrusion rate in grams per minute.

Optionally, the melt-processible perfluorinated fluoropolymer may comprise recurring units derived from functional perfluoromonomers comprising a carboxylic or sulfonic acid group, in its acid, acid halide or salt form. Functional perfluoromonomers are preferably chosen among functional (per)fluoro-oxyalkylvinylethers. Non limitative examples of functional (per)fluoro-oxyalkylvinylethers are notably:

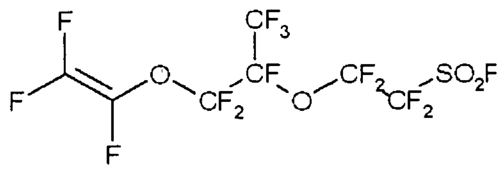

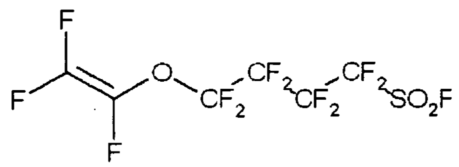

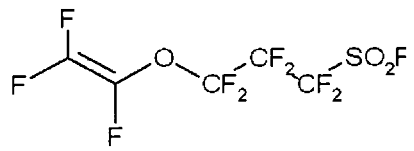

Preferred melt-processible perfluorinated fluoropolymer is chosen among TFE copolymers comprising at least 0.5 % wt, preferably at least 1 % wt of recurring units derived from perfluoroalkylvinylethers and/or (per)fluoro-oxyalkylvinylethers and/or functional (per)fluoro-oxyalkylvinylethers and TFE copolymers comprising at least 5 % wt, preferably at least 10 % wt, more preferably at least 15 % wt of recurring units derived from $C_3$-$C_8$ perfluoroolefins.

Examples of melt-processible pefluorinated fluoropolymers are notably those commercialized under the brands HYFLON® MFA and HYFLON® PFA by Solvay Solexis S.p.A..

Examples of melt-processible perfluorinated fluoropolymer comprising functional perfluoromonomers are notably those commercialized under the brand HYFLON® Ion by Solvay Solexis S.p.A., under the brand NAFION® by DuPont de Nemours, and under the brand FLEMION® by Asahi Chemical.

Preferably the fluoropolymer is partially fluorinated.

By partially fluorinated fluoropolymer it is meant copolymers of one or more per(halo)fluoromonomer (for instance tetrafluoroethylene, chlorotrifluoroethylene, hexafluoropropylene, perfluoroalkylvinylethers, etc.) with a hydrogenated comonomer (for instance ethylene, propylene, vinylethers, etc.), or homopolymers of hydrogen-containing fluorinated monomers (for instance vinylidene fluoride, trifluoroethylene, vinylfluoride, etc.) and their copolymers with fluorinated and/or hydrogenated monomers.

Preferred partially fluorinated fluoropolymer is chosen among vinylidene fluoride polymers (PVDF, hereinafter), ethylene/chlorotrifluoroethylene copolymers (ECTFE, herein after) and mixtures thereof.

For the purpose of the invention, the term vinylidene fluoride polymer is intended to denote homo- and copolymers of vinylidene fluoride with one or more fluorinated and/or hydrogenated comonomers, as above detailed. Preferably, vinylidene fluoride polymers are chosen among homopolymers and copolymers comprising from 0 to 25 % by weight of a comonomer. Preferably the comonomer is chosen among hexafluoropropylene (HFP), chlorotrifluoroethylene (CTFE) and trifluoroethylene (TrFE). More preferably the comonomer is HFP and/or CTFE.

The melt index of the PVDF is advantageously at least 0.01, preferably at least 0.05, more preferably at least

0.5 g/10 min.

The melt index of the PVDF is advantageously at most 50, preferably at most 40, more preferably at most 30 g/10 min.

The melt index of PVDF is measured in accordance with modified ASTM test No. 1238, run at 230°C, under a piston load of 5 kg.

The PVDF has a melting point advantageously of at least 120°C, preferably at least 125°C, more preferably at least 130°C.

The PVDF has a melting point advantageously of at most 177°C, preferably at most 175°C.

The melting point is determined by DSC, at a heating rate of 10°C/g, according to ASTM D 3418.

The ECTFE which can be used in the composition of the invention are notably high molecular weight, normally solid, thermoplastic polymers containing from 40 to 60 % by moles of recurring units derived from ethylene and from 60 to 40 % by moles of recurring units derived from CTFE.

Optionally, the ECTFE can also contain nominal amounts, up to 10 % by moles, of copolymerizable comonomer other than ethylene and chlorotrifluoroethylene, including propylene, isobutylene, vinyl fluoride, hexafluoropropylene, tetrafluoroethylene, hexafluoroisobutylene, vinylidene fluoride, perfluoro-vinyl ether, acrylic acid and alkyl ester, methacrylic acid and alkyl ester, perfluoro alkyl ethylene.

The melt index of the ECTFE is advantageously at least 0.1, preferably at least 0.5, more preferably at least 1.0g/10 min.

The melt index of the ECTFE is advantageously at most 500, preferably at most 300, more preferably at most 250 g/10 min.

The melt index of ECTFE is measured in accordance with modified ASTM test No. 1238, run at 275°C, under a piston load of 2.16 kg.

The ECTFE has a melting point advantageously of at least 150°C and at most 265°C.

The melting point is determined by DSC, at a heating rate of 10°C/g, according to ASTM D 3418.

Particularly adapted to thermoplastic halogenated polymer composition of the invention is ECTFE available from Solvay Solexis, Inc., Thorofare, New Jersey, USA, under the tradename HALAR®.

The thermoplastic halogenated polymer (A) of the present invention can be prepared according to any known techniques, for instance by copolymerization of the corresponding monomers, in suspension in organic or aqueous medium or in aqueous emulsion, in the present of a suitable radical initiator, at a temperature comprised advantageously between -60° and 150° C, preferably between -20°C and 100° C, more preferably between 0° and 80°C. The reaction pressure is comprised advantageously between 0.5 and 180 bar, preferably between 5 and 140 bar.

Should the thermoplastic halogenated polymer (A) be a copolymer, the addition of the comonomer is carried out according to known techniques of the art, and however a continuous or step by step addition of the comonomer during the reaction is preferred.

Among the various radical initiators, it can be used in particular:

(i) bis-acylperoxides of formula ($R_f$ -CO-O)$_2$, wherein $R_f$ is a (per)haloalkyl $C_1$-$C_{10}$ (see for instance EP 185 242 and U.S. Pat. No. 4 513 129), or a perfluoropolyoxyalkylene group (see for instance EP 186 215 and U.S. Pat. No. 5 021 516); among them, bis-trichloroacetylperoxide and bis-dichlorofluoro acetylperoxide are particularly preferred (see U.S. Pat. No. 5 569 728);

(ii) dialkylperoxides of formula ($R_H$ -O)$_2$, wherein $R_H$ is an alkyl $C_1$ - $C_{10}$ ; diter-butylperoxide (DTBP) is particularly preferred;

(iii) water soluble inorganic peroxides, such as ammonium or alkaline metals persulphates or perphosphates; sodium and potassium persulphate is particularly preferred;

(iv) dialkylperoxydicarbonates, wherein the alkyl has from 1 to 8 carbon atoms, such as di-n-propyl-peroxydicarbonate and di-isopropyl-peroxydicarbonate (see EP 526 216);

(v) alkyl peroxyesters, like tert-amylperoxypivalate and tert-butylperoxyisobutirate;

(vi) organic or inorganic redox systems, such as ammonium persulphate/sodium sulphite, hydrogen peroxide/aminoiminomethansulphinic acid, terbutylhydroperoxide/ metabisulphite (see U.S. Pat. No. 5 453 477).

In the case of the suspension copolymerization, the reaction medium is notably formed by an organic phase, to which water is usually added in order to favor the heat dispersion developing during the reaction. The organic phase can be formed by the monomer(s) themselves, without addition of solvents, or by the monomer(s) dissolved in a suitable organic solvent. As organic solvents chlorofluorocarbons are commonly used, such as $CCl_2F_2$ (CFC-12), $CCl_3F$ (CFC-11), $CCl_2F$-$CClF_2$, (CFC-113), $CClF_2$ - $CClF_2$ (CFC-114), and the like.

Since such products have a destroying effect on the ozone present in the stratosphere, alternative products have been recently proposed, such as the compounds containing only carbon, fluorine, hydrogen and optionally oxygen,

described in U.S. Pat. No. 5 182 342. In particular (per)fluoropolyethers with at least one hydrogenated end group, preferably two, such as $-CF_2 H$, $-CF_2 -CF_2H$, $-CF(CF_3)H$, can be used. A valid alternative is given by the hydrocarbons with branched chain described in U.S. Pat. No. 5 434 229, having from 6 to 25 carbon atoms and a ratio between methyl groups and carbon atom number higher than 0.5, such as for instance 2,3-dimethylbutane, 2,3-dimethylpentane, 2,2,4-trimethylpentane, 2,2,4,6,6-pentamethylheptane (isododecane), 2,2,4,4,6-pentamethylheptane, etc, or mixtures thereof.

In the case of aqueous emulsion (co)polymerization, the presence of a suitable surfactant is required. The fluorinated surfactants of formula:

$R_f, X^- M^+$

are the most commonly used, wherein $R_f$, is a (per)fluoroalkyl chain $C_5$-$C_{16}$ or a (per)fluoropolyoxyalkylene chain, $X^-$ is $-COO^-$ or $-SO_3^-$, $M^+$ is selected from $H^+$, $NH_4^+$, an alkaline metal ion. As non limitative example of fluorinated surfactants mention may be made of ammonium and/or sodium perfluorooctanoate, (per)fluoropolyoxyalkylenes having one or more carboxylic end groups.

The thermoplastic halogenated polymer (A) can be advantageously prepared by a process carried out in the presence of dispersions, emulsions or microemulsions of perfluoropolyoxyalkylenes, according to U.S. Pat. No. 4 789 717 and U.S. Pat. No. 4 864 006, or also of microemulsions of fluoropolyoxyalkylenes having hydrogenated end groups and/or hydrogenated repeating units, optionally in mixture with a hydrocarbon, according to U.S. Pat. No. 5 498 680 and EP 712 882.

The control of molecular weight of the thermoplastic halogenated polymer (A) generally needs the use of telogen agents (chain transfer agents) in polymerization, owing to the fact that the used monomers generally do not show a telogen activity comparable to that of the known chain transfer agents.

When chain transfer agents are used, these can be for example hydrocarbons, alcohols, dialkylcarbonates, ketones, ethers, particularly methyl-tert-butylether, or halogenated hydrocarbons, having from 1 to 6 carbon atoms. Among them, chloroform, ethers, dialkylcarbonates and substituted alkyl cyclopentanes, such as methylcyclopentane are particularly preferred (see U.S. Pat. No. 5 510 435). The transfer agent is introduced into the reactor at the beginning of the reaction, or continuously or step by step during the polymerization. The amount of chain transfer agent can range within rather wide limits, depending on the polymerization conditions (reaction temperature, monomers, molecular weight required of the polymer, etc). In general such amount ranges from 0.01 to 30% by weight, preferably from 0.05 to 10% by weight, based on the total amount of monomers introduced in the reactor.

Optionally, the composition described above can further comprise processing aids, pigments, filling materials, electrically conductive particles, lubricating agents, mold release agents, heat stabilizer, anti-static agents, extenders, reinforcing agents, organic and/or inorganic pigments like $TiO_2$, carbon black, acid scavengers, such as MgO, flame-retardants, smoke-suppressing agents.

By way of non-limiting examples of filling material, mention may be made of mica, alumina, talc, carbon black, glass fibers, carbon fibers, graphite in the form of fibers or of powder, carbonates such as calcium carbonate, macromolecular compounds.

As lubricating agents we can notably mention graphite, perfluorinated polymers, such as PTFE, silicone oil and the like.

Mold release agents that can be used in the compositions according to the invention are notably perfluorinated polymers, such as PTFE, silicone oil and the like.

Pigments useful in the composition notably include, or will comprise, one or more of the following : Artic blue #3, Topaz blue #9, Olympic blue #190, Kingfisher blue #211, Ensign blue #214, Russet brown #24, Walnut brown #10, Golden brown # 19, Chocolate brown #20, Ironstone brown #39, Honey yellow #29, Sherwood green #5, and Jet black #1 available from Shepard Color Company, Cincinnati, Ohio, USA.; black F-2302, blue V-5200, turquoise F-5686, green F-5687, brown F-6109, buff F-6115, chestnut brown V-9186, and yellow V-9404 available from Ferro Corp., Cleveland, Ohio, USA and METEOR® pigments available from Englehard Industries, Edison, New Jersey, USA.

Among flame-retardant and smoke-suppressing agents mention can be notably made of Borax, Bismuth Succinate, Zinc stannate, Magnesium and/or Aluminium hydroxide, Calcium Molybdate and Calcium Tungstate.

The compositions of the invention can be obtained by any of the usual techniques for preparing thermoplastic polymer compositions, especially by a method comprising mixing the thermoplastic halogenated polymer (A) in the form of powders or granules with the fused silica particles (B) (as well as optionally with the other additives or filling materials), in the desired proportions, before they are subjected to a thermomechanical processing technique such as extrusion, injection molding, sheathing and the like.

This operating method can be applied either with a view to manufacturing finished products such as, for example, hollow bodies, pipes and the like, or, by adding a granulation stage thereto, with a view to having available granules containing the desired thermoplastic halogenated polymer composition, additives and fillers in suitable proportions, which facilitates a subsequent conversion into finished products.

Another aspect of the present invention concerns a process for manufacturing the thermoplastic halogenated polymer composition as above described, which comprises mixing the thermoplastic halogenated polymer (A) and the

fused silica particles (B).

Advantageously, the process comprises (i) mixing by dry blending and/or (ii) melt compounding the thermoplastic halogenated polymer (A) and the fused silica particles (B).

Preferably, the thermoplastic halogenated polymer (A) and the fused silica particles (B) are mixed by melt compounding.

Advantageously, the thermoplastic halogenated polymer (A) and the fused silica particles (B) are melt compounded in continuous or batch devices. Such devices are well-known to those skilled in the art.

Examples of suitable continuous devices to melt compound the composition of the invention are notably screw extruders. Preferably, the thermoplastic halogenated polymer (A) and the fused silica particles (B) are melt compounded in a twin-screw extruder.

Optionally, the thermoplastic halogenated polymer (A) and the fused silica particles (B) are dry mixed in powder form in a high intensity mixer at a temperature of advantageously 20°C to 45°C, before melt compounding in a screw extruder. Suitable high intensity dry-mixers are well known to those skilled in the art. Good results have been obtained with a HENSCHEL-MIXER® from HENSCHEL-MixingSystems™, Broadview Heights, Ohio, USA.

Another object of the invention is the use of fused silica particles (B) to improve the impact properties of the thermoplastic halogenated polymer (A).

Preferably the fused silica particles (B) are used in the thermoplastic halogenated polymer composition as above described to improve the impact properties of the thermoplastic halogenated polymer (A).

Advantageously the use of fused silica particles (B) improves the impact properties (expressed in terms of Notched Izod Impact Strength measured in accordance with the ASTM D256 specification, Test method A) of the thermoplastic halogenated polymer (A) by at least 5 $kJ/m^2$ with respect to the thermoplastic halogenated polymer (A) free from fused silica particles (B).

At the same time of improving impact properties, the use of fused silica particles (B) advantageously improves also the dimensional stability of the thermoplastic halogenated polymer (A) during the molding process.

Typically, the dimensional stability of a polymer can be appreciated by the PVT curves ("pressure-volume-temperature"), which describe how specific volume of the polymer changes with pressure and temperature. Generally, for the amorphous polymers, the slope of the curve as a function of the temperature (T-V curve at constant pressure) for a given pressure is greater above the glass transition temperature ($T_g$). Greater shrinkage occurs above $T_g$ than below $T_g$. For the semicrystalline polymers, a much bigger increase in specific volume generally occurs at the melting point. This enormous drop in specific volume shows that much greater shrinkage typically occurs for semicrystalline polymers than for amorphous polymer. Specific volume is also generally affected by pressure. The specific volume curves as a function of temperature shifts down with increasing pressure.

The Applicant has found that, while increasing the impact properties, the use of fused silica particles (B) also advantageously shifts the T-V curves at constant pressure of the thermoplastic halogenated polymer (A) down and decreases the slopes. This flattening of the T-V curve is advantageous because it decreases the total shrinkage for a part.

From a practical standpoint, the dimensional stability in molding can be notably evaluated by determining the shrinkage behavior of the composition when molded in a mold cavity. Shrinkage can be measured in terms of linear or volumetric shrinkage.

The volumetric shrinkage $S_{Volumetric}$ is defined as the ratio of the difference between the mold volume ($V_{Mold}$) and the part volume ($V_{Part}$) to the mold volume. Thus, the volumetric shrinkage $S_v$ is found from the formula:

$$S_{Volumetric} = \frac{V_{Mold} - V_{Part}}{V_{Mold}}$$

The linear shrinkage $S_{Linear}$ is defined as the ratio of the difference between the mold length ($L_{Mold}$) and the length of the part after molding ($L_{Part}$) to the mold length. Thus, the linear shrinkage $S_L$ is found from the formula:

$$S_{Linear} = \frac{L_{Mold} - L_{Part}}{L_{Mold}}$$

For isotropic parts, linear shrinkage, $S_{Linear}$ is typically approximately one third of the volumetric shrinkage $S_{Volumetric}$.

The decrease in shrinkage ($\Delta S_{Linear}$ or $\Delta S_{Volumetric}$) of the thermoplastic halogenated polymer (A) obtained by the use of the fused silica particles (B) can thus be notably expressed according to the following formulae:

$$\Delta S_{Linear} = \frac{(S_{Linear})_{polymer(A)} - (S_{Linear})_{polymer(A)+fused silica particles(B)}}{(S_{Linear})_{polymer(A)}}$$

$$\Delta S_{Volumetric} = \frac{(S_{Volumetric})_{polymer(A)} - (S_{Volumetric})_{polymer(A)+fused silica particles(B)}}{(S_{Volumetric})_{polymer(A)}}$$

For isotropic parts, generally $\Delta S_{Linear}$ is typically approximately equal to $\Delta S_{Volumetric}$.

The use of fused silica particles (B) decreases the linear shrinkage of the thermoplastic halogenated polymer (A) of advantageously at least 2.5 %, preferably of at least 5 %, more preferably of at least 10 % with respect to the polymer (A) free from particles (B).

Another object of the invention is the use of fused silica particles (B) to improve the flammability and smoke release properties of the thermoplastic halogenated polymer (A).

Advantageously the use of fused silica particles (B) improves the flammability and smoke release properties (expressed in terms of ignition time, as measured by cone calorimetry according to ASTM E 1354-02 standard at an irradiance level of 75 kW/ $m^2$) of the thermoplastic halogenated polymer (A) by at least 100 sec with respect to the thermoplastic halogenated polymer(A) free from fused silica particles (B).

The Applicant thinks, without nevertheless this interpretation limiting the scope of the present invention that the fused silica particles (B) can also positively affect other key-properties of the thermoplastic halogenated polymer (A), such as thermal stability, strength, transparency, light transmittance, UV radiation dispersion and the like.

The thermoplastic halogenated polymer composition as above described may be used for manufacturing articles, such as shaped articles by casting, extrusion, injection or compression molding processes.

Still an object of the invention is an article comprising the thermoplastic halogenated polymer composition as above described.

Non limitative examples of articles are notably molded items, shaped articles, pipes, drainage pipes, flexible pipes, fittings, films, sheets, membranes, coatings, hollow bodies.

The addition of the fused silica particles (B) to the thermoplastic halogenated polymer (A) advantageously improves the impact properties, hardness and dimensional stability compared to thermoplastic halogenated polymer compositions that do not comprise the fused silica particles (B). Additionally, the transmittance of high clarity films made from thermoplastic halogenated polymer compositions comprising the fused silica particles (B) is not affected and the thermal stability of the composition is not lowered when compared to unfilled polymer (A).

Some examples of the present invention are reported hereinafter, whose purpose is merely illustrative but not limitative of the scope of the invention itself.

**EXAMPLES**

Examples 1-8

Compositions comprising fused silica (UVT Sunspheres 00.5 from Suncolor Corporation, BET ($N_2$) surface area = 15 $m^2$/g, APS = 0.5 $\mu$m, with 100% of particles passing 1.7 $\mu$m) and SOLEF® PVDF resin from Solvay Solexis, Inc.,Thorofare, New Jersey, USA were prepared in a Thyssen HENSCHEL-MIXER® type FM 10C and pellitized using a BRABENDER® twin screw extruder equipped with 10: I L:D (length/diameter) screws. The temperature profile of each zone of the twin screw extruder is set forth in Table 1.

**Table 1**

| Zone | Temperature |
|---|---|
| ZONE 1 | 165°C |
| ZONE 2 | 175°C |

(continued)

| Zone | Temperature |
|---|---|
| ZONE 3 | 180°C |
| ADAPTER | 195°C |
| DIE | 200°C |

The melt temperature of the polymer was 200°C.

Eight compositions were made each having 100 parts by weight of the PVDF resin, 0 to 20 parts by weight of fused silica particles as set forth in Table 3 below and 0.6 parts of additives of flame retardants and acid catcher additives. In Table 3, PVDF A is SOLEF® homopolymer of vinylidene fluoride having a Melt Flow Index (MFI) of 6 g/10 min measured according to ASTM D 1238 at 230°C and 5 kilogram weight, and PVDF B is a SOLEF® homopolymer of vinylidene fluoride having an MFI of 10 g/10 min measured at 230°C and 5 kilograms weight.

In each example, at least ten specimen pieces were made from the compositions by injection molding the pelletized composition. The approximate molding conditions are set forth in Table 2.

**Table 2**

| Zone | Temperature |
|---|---|
| ZONE 1 | 210°C |
| ZONE 2 | 221°C |
| ZONE 3 | 230°C |
| NOZZLE | 232°C |
| Mold Temperature | 80°C |
| Injection Pressure | 1 000 psi (68 atm) |

Ten specimen pieces from each example were tested for Notched Izod Impact Strength in accordance with the ASTM D256 specification. Test method A. An average Notched Izod Impact Strength measurement for each example was calculated. The average Notched lzod Impact Strength and break mode for each example is set forth in Table 3.

**Table 3**

| Example | Parts of Fused Silica particles | Average Notched Izod Impact Strength kJ/$m^2$ | Break Mode |
|---|---|---|---|
| PVDF A | | | |
| 1R | 0 | 110 | Clean |
| 2 | 5 | 119 | Clean |
| 3 | 10 | 311 | Hinge |
| 4 | 20 | 355 | Hinge |
| PVDF B | | | |
| 5R | 0 | 57 | Clean |
| 6 | 7.5 | 105 | Clean |
| 7 | 10 | 215 | Hinge |
| 8 | 15 | 257 | Hinge |

In Table 3, clean break mode pertains to notched specimen pieces which separated into two or more pieces during the test. Hinge break mode pertains to an incomplete break (i.e., when two parts of sample kept together).

Examples 9-12

An additional series of compositions comprising fused silica (UVT Sunspheres 00.5 from Suncolor Corporation) were prepared following procedure above described. Each composition was composed of 100 parts by weight of the PVDF resin and 12.43 parts by weight of fused silica particles and, were noted, suitable weight parts of flame retardants and acid catcher additives, as set forth in Table 4 below. In Table 4, PVDF C is SOLEF® homopolymer of vinylidene fluoride having a Melt Flow Index (MFI) according to ASTM D 1238 of 3.5 g/10 min measured at 230°C and 2.16 kilogram

weight and an MFI of 10 g/10 min measured at 230°C and 5 kilograms weight.

These compositions were submitted to cone calorimeter tests to evaluate their flammability and smoke-release properties. Results obtained at an irradiance level of 75 kW/$m^2$ are summarized in Table 4.

The Cone Calorimeter test is a small scale method for assessing materials reaction to fire. The method follows the procedure given in ASTM E 1354-02 standard. The surface of the test specimen is exposed to a constant level of heat irradiance, within the range 0-100 kW/$m^2$, from a conical heater. Volatile gases from the heated specimen are ignited by an electrical spark igniter. Combustion gases are collected by an exhaust hood for further analysis. This gas analysis makes it possible to calculate heat release rate and to assess production of toxic gases from the specimen. Smoke production is assessed by measuring attenuation of a laser beam by smoke in the exhaust duct. The attenuation is related to volume flow, resulting in a measure of smoke density called smoke extinction area [$m^2$/s], the higher the smoke extinction area, the higher being the smoke density, i.e. the smoke produced by the specimen.

The specimen is mounted on a load cell which records the mass loss rate of the specimen during combustion. A thorough analysis requires testing at several irradiance levels. Typical levels of irradiance are 35, 50 and 75 kW/$m^2$. According to ASTM E 1354-02 standard, three specimens shall he tested at each heat flux level.

Compositions were tested under the form of films or plaques, having a surface essentially flat, a dimension of 4" by 4" (10.16 cm by 10.16 cm) and a maximum thickness of 50 mm.

**Table 4**

| Example | Sample description | | Ignition time (s) | Peak Smoke release rate ($m^2$/s) | Total Smoke ($m^2$) |
|---|---|---|---|---|---|
| | Polymer (A) | Other components | | | |
| 9R | PVDF C | No fused silica particles | 534 | 0.0110 | 2.13 |
| 10 | PVDF C | 12.43 phr fused silica particles | 228 | 0.0081 | 0.72 |
| 11 | PVDF C | 12.43 phr fused silica particles<br>0.6 phr $CaMoO_4$ | 352 | 0.0084 | 0.77 |
| 12 | PVDF C | 12.43 phr fused silica particles<br>1.25 phr Ca tungstate | 229 | 0.0051 | 1.69 |

## Claims

**1.** A thermoplastic halogenated polymer composition comprising:

at least one thermoplastic halogenated polymer (A); and
less than 30 % by weight of (A) of fused silica particles having a BET ($N_2$) surface area of at most 50 $m^2$/g (B), the BET surface area being measured as per the Brunauer, Emmett and Teller method of calculation, according to ISO 9277, wherein said thermoplastic halogenated polymer (A) is chosen among vinylidene fluoride polymers (PVDF), ethylene/chlorotrifluoroethylene copolymers (ECTFE) and mixtures thereof.

**2.** The thermoplastic halogenated polymer composition of Claim 1, wherein the fused silica particles (B) have a BET ($N_2$) surface area of at least 5 $m^2$/g.

**3.** The thermoplastic halogenated polymer composition of Claim 1, comprising at least 0.5 % of fused silica particles (B) by weight of thermoplastic halogenated polymer (A).

**4.** A process for manufacturing the thermoplastic halogenated polymer composition according to any of preceding claims, comprising mixing the thermoplastic halogenated polymer (A) and the fused silica particles (B).

**5.** Use of fused silica particles (B) to improve the impact properties of the thermoplastic halogenated polymer (A).

**6.** Use of fused silica particles (B) to improve the flammability and smoke release properties of thermoplastic halogenated polymer (A).

7. An article comprising the thermoplastic halogenated polymer composition according to anyone of Claims 1 to 3.

**Patentansprüche**

1. Zusammensetzung auf Basis von thermoplastischem halogeniertem Polymer, enthaltend:

   mindestens ein thermoplastisches halogeniertes Polymer (A) und weniger als 30 Gew.-%, bezogen auf (A), Quarzgutteilchen mit einer BET($N_2$)-Oberfläche von höchstens 50 $m^2$/g (B), wobei die BET-Oberfläche nach der Berechnungsmethode von Brunauer, Emmett und Teller gemäß ISO 9277 gemessen wird, bei der das thermoplastische halogenierte Polymer (A) unter Vinylidenfluoridpolymeren (PVDF), Ethylen/Chlortrifluorethylen-Copolymeren (ECTFE) und Mischungen davon ausgewählt ist.

2. Zusammensetzung auf Basis von thermoplastischem halogeniertem Polymer nach Anpruch 1, bei der die Quarzgutteilchen (B) eine BET($N_2$)-Oberfläche von mindestens 5 $m^2$/g aufweisen.

3. Zusammensetzung auf Basis von thermoplastischem halogeniertem Polymer nach Anpruch 1, enthaltend mindestens 0,5% Quarzgutteilchen (B), bezogen auf das Gewicht des thermoplastischen halogenierten Polymers (A).

4. Verfahren zur Herstellung der Zusammensetzung auf Basis von thermoplastischem halogeniertem Polymer nach einem der vorhergehenden Ansprüche, bei dem man das thermoplastische halogenierte Polymer (A) und die Quarzgutteilchen (B) mischt.

5. Verwendung von Quarzgutteilchen (B) zur Verbesserung der Schlageigenschaften des thermoplastischen halogenierten Polymers (A).

6. Verwendung von Quarzgutteilchen (B) zur Verbesserung der Brand- und Rauchentwicklungseigenschaften von thermoplastischem halogeniertem Polymer (A).

7. Gegenstand, umfassend die Zusammensetzung auf Basis von thermoplastischem halogeniertem Polymer nach einem der Ansprüche 1 bis 3.

**Revendications**

1. Composition de polymère thermoplastique halogéné, comprenant :

   au moins un polymère thermoplastique halogéné (A) ; et
   moins de 30 % en poids, par rapport à (A), de particules de silice fondue présentant une surface BET($N_2$) d'au plus 50 $m^2$/g (B), la surface BET étant mesurée d'après la méthode de calcul de Brunauer, Emmett et Teller, conformément à ISO 9277, dans laquelle ledit polymère thermoplastique halogéné (A) est choisi parmi des polymères de fluorure de vinylidène (PVDF), des copolymères d'éthylène/ chlorotrifluoréthylène (ECTFE) et leurs mélanges.

2. Composition de polymère thermoplastique halogéné selon la revendication 1, dans laquelle les particules de silice fondue (B) présentent une surface BET($N_2$) d'au moins 5 $m^2$/g.

3. Composition de polymère thermoplastique halogéné selon la revendication 1, comprenant au moins 0,5 % de particules de silice fondue (B) en poids par rapport au polymère thermoplastique halogéné (A).

4. Procédé de fabrication de la composition de polymère thermoplastique halogéné selon l'une quelconque des revendications précédentes, comprenant le mélangeage du polymère thermoplastique halogéné (A) et des particules de silice fondue (B).

5. Utilisation de particules de silice fondue (B) pour améliorer les propriétés aux chocs du polymère thermoplastique halogéné (A).

6. Utilisation de particules de silice fondue (B) pour améliorer les propriétés d'inflammabilité et de dégagement de

fumée du polymère thermoplastique halogéné (A).

7. Article comprenant la composition de polymère thermoplastique halogéné selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5077115 A
- US 5358775 A
- US 20010053408 A
- EP 0695116 A
- EP 185242 A
- US 4513129 A
- EP 186215 A
- US 5021516 A
- US 5569728 A
- EP 526216 A
- US 5453477 A
- US 5182342 A
- US 5434229 A
- US 4789717 A
- US 4864006 A
- US 5498680 A
- EP 712882 A
- US 5510435 A


### Non-patent literature cited in the description


- **MARK S.M. ALGER.** Polymer Science Dictionary. Elsevier Applied Science, 1989